# EUROPEAN PATENT APPLICATION

(11) **EP 1 793 629 A1**
(43) Date of publication of application: **06.06.2007**
(21) Application number: 06251082.1
(22) Date of filing: 28.02.2006
(51) Int. Cl.: H04Q 7/32, H04L 12/56, H04L 12/28

(54) **Communication system and communication terminal device**

(30) Priority: 30.11.2005 JP 2005345785
(71) Applicant: FUJITSU LIMITED, Kawasaki-shi, Kanagawa 211-8588 (JP)
(72) Inventor: Hu, Rongcai,c/o Fujitsu Limited, Kawasaki-shi Kanagawa 211-8588 (JP)
(74) Representative: Stebbing, Timothy Charles

(57) **Abstract**

In the communication system having a first communication terminal device (20A, 20B) which performs peer-to-peer communication, and a second communication terminal device (10) which performs communication via a communication network. The first communication terminal device (20A, 20B) includes: a relay application section which applies for communication relay via the communication network to the second communication terminal device (10); and a relay result receiving section which receives a result of communication performed by the second communication terminal device (10) via the communication network. The second communication terminal device (10) includes: an application receiving section which receives a communication relay application from the first communication terminal device (20A, 20B); a relay communication section which performs communication via the communication network; and a relay result transmitting section which transmits the result of communication by the relay communication section, to the first communication terminal device (20A, 20B).

## Description

### BACKGROUND OF THE INVENTION

### Field of the Invention

The present invention relates to a communication system which performs communication via a communication network, and a communication terminal device constituting the communication system.

### Description of the Related Art

Conventionally, speech communication by using a telephone set and transmission/reception of an electronic mail by using a personal computer and the like have been widely utilized to communicate with a family or friends. Byutilizing the communication means such as a telephone and an electronic mail, it is possible to easily communicate with a family and friends wherever and whenever desired.

In recent years, a portable telephone and a PDA (Personal Digital Assistant) are also used not only as a mere communication means but also as a photographing device for photographing a subject, a computer for browsing a website, a substitute of an alarm clock at a visiting place, and the like. Further, as a result of the communication charges being significantly reduced, the number of people who own a portable telephone and the like as a communication terminal device for their personal use has also been increasing. In such situations, manufacturers of the communication terminal devices have been competing in providing new facilities so as to make their communication terminal devices unique.

The functions which have been provided in recent years include a function to perform a high-speed data communication (for example, dual mode, HSDPA and the like) by utilizing a latest data compression technique and the like, a function to enhance the reception sensitivity of radio waves, a function to download a moving image, a game and the like, and a function to utilize a speech communication, an electronic mail and the like even abroad. However, since version-up after the purchase is not generally expected in the portable telephone and the like, there is a problem that a new communication terminal device must be newly purchased in order to use these functions.

For this problem, a technique is disclosed in a patent document 1: Japanese Patent Laid-Open No. 10-135899, in which a relay device which relays a radio wave transmitted from a base station to a communication terminal device is used to transfer the radio wave to a communication terminal device existing in a location where the radio wave from the base station is difficult to be transmitted, and a technique is also disclosed in a patent document 2: Japanese Patent Laid-Open No.2000-49690, in which a portable telephone existing in a communication area range where the portable telephone is capable of performing transmission/reception of a radio wave to/from a base station is used to transfer the radio wave to a portable telephone existing outside the communication area range. With the techniques disclosed in the patent document 1 and the patent document 2, a communication terminal device already possessed can be utilized over a wide range without a communication terminal device having a high reception sensitivity of radio waves being newly purchased.

However, the techniques disclosed in the patent document 1 and the patent document 2 are intended to perform communication even in the area where radio wave is difficult to be transmitted. Thus, even when communication accuracy is improved by using the techniques, the download function and the overseas communication function as described above can not be utilized by using a communication terminal device which is not provided with such functions, as a result of which a latest portable terminal device needs to be newly purchased. On the other hand, during overseas travel, it is also conceivable to rent a communication terminal device available in the country of a travel destination. However, in the rented communication terminal device, there are many cases where an address book in which contact destinations of a family and friends are registered is not prepared, and where explanation of operation elements is displayed by the language of the country. As a result, the need for using a familiar private communication terminal device as it is has been increasing.

The present invention has been made in view of the above circumstances and provides a communication system and a communication terminal device which are capable of utilizing various kinds of functions and services.

### SUMMARY OF THE INVENTION

The present invention provides a communication system, having a first communication terminal device which performs peer-to-peer communication by a first communication system, and a second communication terminal device which performs peer-to-peer communication with the first communication terminal device by the first communication system and performs communication via a communication network by a second communication system,
the first communication terminal device including: a relay application section which applies for a relay of communication via the communication network to the second communication terminal device by the first communication system; and a relay result receiving section which receives by the first communication system a result of communication by the second communication system via the communication network performed by the second communication terminal device on the basis of an application from the relay application section,
the second communication terminal device including: an application receiving section which receives a communication relay application from the first communication terminal device by the first communication system; a relay communication section which performs, in response to receipt of an application by the application receiving section, communication via the communication network in accordance with the application; and a relay result transmitting section which transmits the result of communication performed by the relay communication section, by the first communication system to the first communication terminal device.

With the communication system according to the present invention, in the second communication terminal device, communication via the communication network is performed on the basis of the application from the first communication terminal device, and the communication result is transmitted to the first communication terminal device by peer-to-peer communication. Therefore, even in the case where functions such as to perform communication via a network, and to utilize a speech communication and an electronic mail abroad, are not loaded into the first communication terminal device, the network communication is vicariously performed by the second terminal device, and the communication result is transmitted to the first communication terminal device by peer-to-peer communication, as a result of which the functions can be utilized by the first communication terminal device.

Further, in the communication system according to the present invention, it is preferred that the relay application section applies for reception of data via the communication network,
that the relay communication section receives the data via the communication network, and
that the relay result transmitting section and the relay result receiving section perform transmission and reception of the data received by the relay communication section, respectively.

The data received by the relay communication section are transmitted by the relay result transmitting section to the first communication terminal device, so as to be received by the relay result receiving section of the first communication terminal device. Thereby, even in the case where a service function to download data via the network and the like is not provided for the first communication terminal device, the service function can be utilized by the first communication terminal device.

In addition, in the communication system according to the present invention, it is preferred that the first communication terminal device further performs communication via the communication network by a third communication system in addition to the peer-to-peer communication by the first communication system, and that the first communication terminal device has a first switching section to perform switching the communication by the third communication system and the communication relayed by the second communication terminal device in accordance with a user operation.

According to the preferred embodiment of the present invention, the communication system can be switched so as to correspond to a use purpose, such as for example being switched to communication relayed via the second communication terminal device when high-speed communication is desired to be performed despite high communication charges, or being switched to communication by the third communication systemwhen communication charges are desired to be suppressed low.

Further, in the communication system according to the present invention, the first communication terminal device further includes a first searching section that performs a search operation on whether the second communication terminal device exists in a communicable range by the second communication system.

Whether the second communication terminal device exists in the communicable range or not is searched, and a relay application is sent to the searched second communication terminal device, as a result of which communication relayed by the second communication terminal device can be surely utilized.

Further, it is preferred that the communication system according to the present invention, has a base station which is connected to the communication network to relay communication, and at least one of the base station, the first communication terminal device and the second communication terminal device has a second switching section which performs a switching operation on whether the communication relay between the base station and the first communication terminal device by the second communication terminal device is permitted or not, and
that the application receiving section of the second communication terminal device receives a relay application only when communication relay is permitted by the second switching section.

The relay of communication is permitted by the second communication terminal device only when communication quality between the base station and the second communication terminal device can be ensured.

In the communication system according to the present invention, it is preferred that the relay application section of the first communication terminal device applies for communication relay, and applies for relay interruption to the second communication terminal device under communication relay, and
that the base station receives a communication stop request from the second communication terminal device under communication relay and a communication request from a new second communication terminal device, so as to stop communication with the second communication terminal device under communication relay and to start communication with the new second communication terminal device.

The stop of relay is applied from the first communication terminal device to the second communication terminal device, and communication with the new second communication terminal device is started by the base station, so that the second communication terminal device which relays communication can be switched without interrupting data transmission to the first communication terminal device.

The present invention also provides a communication terminal device, which performs peer-to-peer communication by a first communication system, including:
a relay application section which applies for relay of communication via a communication network to a second communication terminal device that performs peer-to-peer communication with the communication terminal device by the first communication system and that performs communication via the communication network by a second communication system; and
a relay result receiving section which receives a result of communication by the second communication system via the communication network performed by the second communication terminal device on the basis of an application from the relay application section, from the second communication terminal device by the first communication system.

With the communication terminal device according to the present invention, it is possible to make the second communication terminal devices vicariously perform communication via the communication network, so as to obtain the communication result via the second communication terminal device.

Further, the present invention also provides a communication terminal device, which performs peer-to-peer communication by a first communication system with a first communication terminal device performing peer-to-peer communication by the first communication system, and which performs communication via a communication network by a second communication system, including:
an application receiving section which receives a communication relay application by the first communication system from the first communication terminal device;
a relay communication section which performs, in response to receipt of an application by the application receiving section, communication corresponding to the application via the communication network by the second communication system; and
a relay result transmitting section which transmits by the first communication system the result of communication by the relay communication section to the first communication terminal device.

With this communication terminal device according to the present invention, it is possible to receive the relay application from the first communication terminal device, to perform communication via the communication network, and to transmit the communication result to the first communication terminal device.

According to the present invention, various functions and services can be utilized by using a familiar communication terminal device which are usually used.

### BRIEF DESCRIPTION OF THE DRAWINGS

Fig. 1 is a schematic illustration of an example of a communication system to which an embodiment according to the present invention is applied;
Fig. 2 is an external perspective illustration of a portable telephone;
Fig. 3 is a figure showing a hardware configuration of the portable telephone;
Fig. 4 is a figure showing functional blocks which are constituted in a low function terminal device, a high function terminal device and a base station, and which are necessary for realizing a function (relay function) characteristic of the present embodiment;
Fig. 5 is a flow chart showing an example of process flow in the relay function;
Fig. 6 is a flow chart showing a series of data flow in the search processing shown in step S20 in Fig. 5;
Fig. 7 is a flow chart showing a series of data flow in the relay application processing shown in step S30 in Fig. 5;
Fig. 8 is a flow chart showing a series of data flow in the case where the communication application processing shown in step S90 in Fig. 5 is performed by the low function terminal device;
Fig. 9 is a flow chart showing a series of data flow in the case where the communication application processing shown in step S40 in Fig. 5 is performed by the high function terminal device;
Fig. 10 is a flow chart showing a series of data flow in data relay processing by the high function terminal device;
Fig. 11 is a flow chart showing a series of data flow in the case where the data relay stop instruction shown in step S70 in Fig. 5 is transmitted from the low function terminal device;
Fig. 12 is a flow chart showing a series of data flow in the case where the data relay stop instruction shown in step S70 in Fig. 5 is transmitted from the high function terminal device;
Fig. 13 is a flow chart showing a series of data flow in the case where the data relay stop instruction shown in step S70 in Fig. 5 is transmitted from the base station; and
Fig. 14 is a flow chart showing a series of data flow in the handover processing shown in step S100 in Fig. 5.

### DETAILED DESCRIPTION OF THE PREFERRED EMBODIMENTS

In the following, the present invention is described with reference to the accompanying drawings.

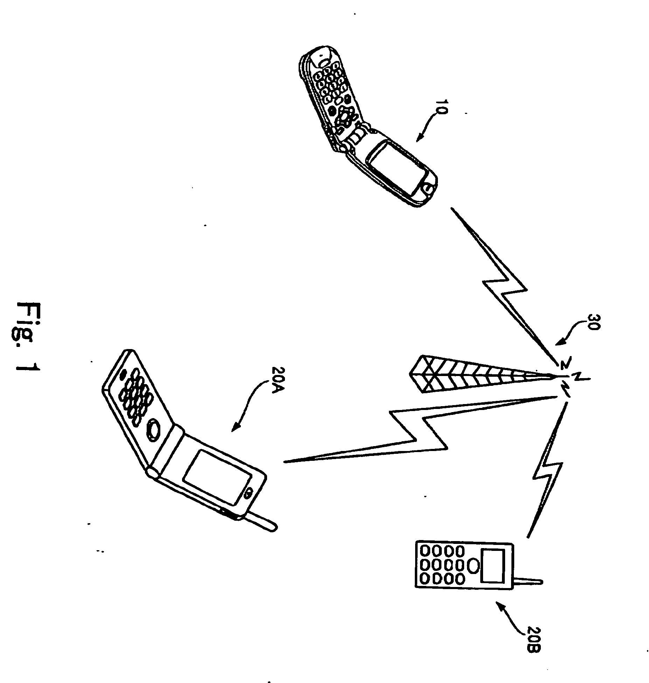

Fig. 1 is a schematic illustration of an example of a communication system to which an embodiment according to the present invention is applied.

In Fig. 1, there are shown portable telephones 10, 20A, 20B and a base station 30 by way of which radio communication is performed between portable telephones 10, 20A, 20B. Noted that in practice, a number of portable telephones are connected with the base station 30, and further a number of base stations, the Internet line and the like are connected with each other, but for the sake of simplicity, only those necessary for explaining the present invention are shown in Fig. 1.

Portable telephones 10, 20A, 20B, each has a network communication section which communicates via the base station 30, and a common communication section which directly performs communication between the portable telephones 10, 20A, 20B by using infrared radiation. Further, in the network communication section provided for the portable telephones 20A, 20B, there is incorporated a high function communication system which performs high-speed transmission and reception of data compressed by a high compression system to and from the base station, while in the network communication section provided for the portable telephones 10, there is incorporated a low function communication system which cannot perform transmission and reception of data compressed by the high compression system but which performs low-speed transmission and reception of data to and from the base station. For this reason, a moving image compressed by the high compression system cannot be downloaded only with the portable telephone 10. In the following, the portable telephone 10 is referred to as a low function terminal device 10, and the portable telephones 20A, 20B are referred to as high function terminal devices 20A, 20B, so as to make them distinguished from each other. The infrared communication system incorporated in the common communication section of the portable telephones 10, 20A, 20B corresponds to an example of the first communication system in the present invention. The high function communication system incorporated in the network communication section of the high function terminal devices 20A, 20B corresponds to an example of the second communication system in the present invention. The low function communication system incorporated in the network communication section of the low function terminal device 10 corresponds to the third communication system in the present invention. Further, the low function terminal device 10 corresponds to an example of the first communication terminal device in the present invention. The high function terminal devices 20A, 20B, each corresponds to an example of the second communication terminal device in the present invention. The base station 30 corresponds to an example of the base station in the present invention.

In the communication system according to the present embodiment, there is prepared a relay function which performs the downloading operation of data compressed by the high compression system between the high function terminal devices 20A, 20B and the base station 30, and which transmits the downloaded data to the low function terminal device 10. The relay function is described in detail below.

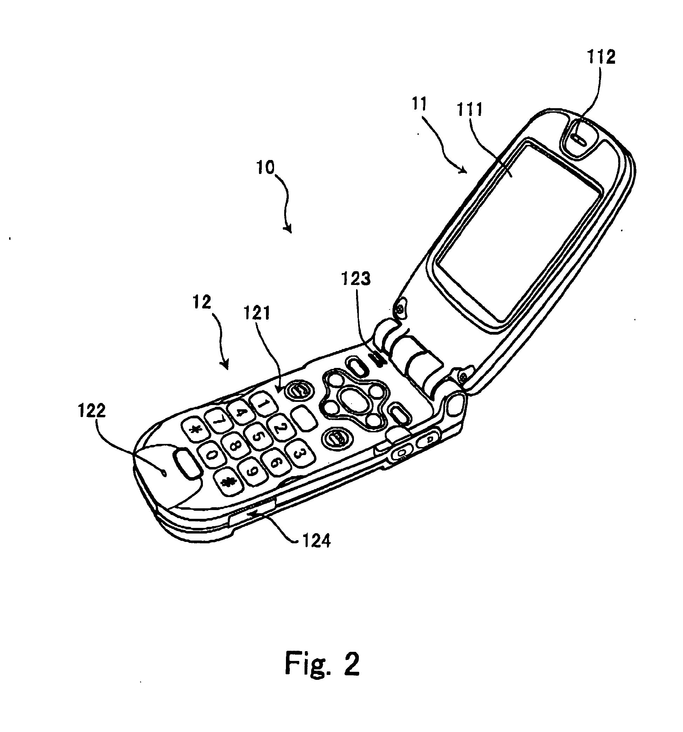

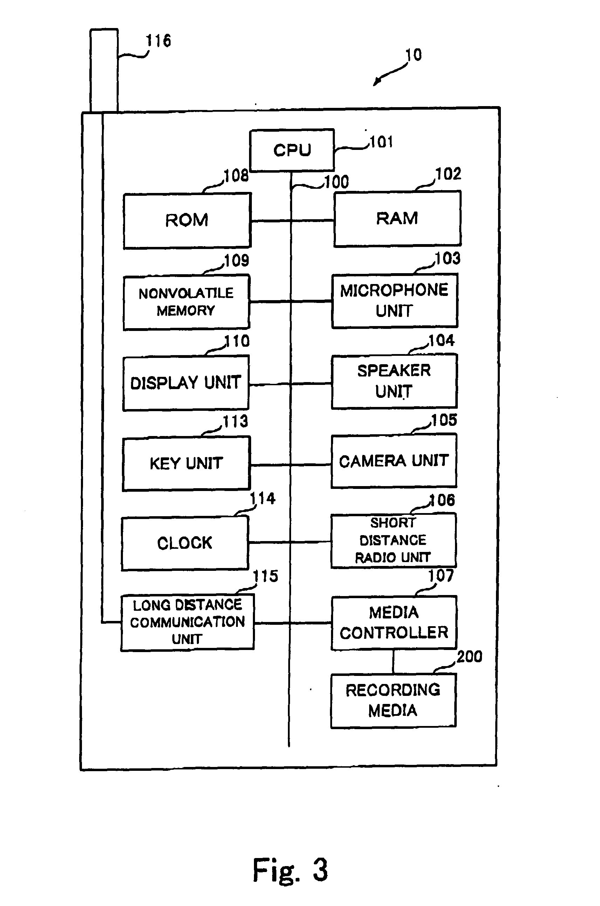

Fig. 2 is an external perspective illustration of a portable telephone, and Fig. 3 is a figure showing a hardware configuration of the portable telephone. The low function terminal device 10 and the high function terminal devices 20A, 20B have different communication performances, but have almost the same configuration. Thus, in Fig. 2 and Fig. 3, the low function terminal device 10 is described on behalf of the devices.

As shown in Fig. 2, the low function terminal device 10 consists of an upper casing 11 and a lower casing 12 which are opened/closed each other. The upper casing 11 is provided with a LCD 111 for displaying an image, and a transmitter port 112 in which a small speaker is arranged and which is brought closer to an ear to listen to sound voice.

The lower casing 12 is provided with various kinds of operation keys 121 which are operated by a user in order to make a phone call, to transmit an electronic mail by using the low function terminal device 10 and to perform various setting operations, a receiver port 122 in which a microphone to pick up user's voice is incorporated and which guides the voice to the microphone, a sound emission port 123 in which a slightly large speaker is incorporated and which outputs sound voice with a degree enough to be surely heard, without the port being brought closer to an ear, and a loading port 124 through which a recording medium is loaded.

Further, a CPU 101, a RAM 102, a microphone unit 103, a speaker unit 104, a camera unit 105, a short distance radio unit 106, a media controller 107, a ROM 108, a nonvolatile memory 109, a display unit 110, a key unit 113, a clock 114, a long distance communication unit 115 and an antenna 116 are shown in Fig. 3, and are connected with each other via a bus 100 except for the antenna 116.

The CPU 101 has a function to perform various programs and performs overall control of the low function terminal device 10.

In the ROM 108, various programs performed by the CPU 101 and various constants necessary for executing the various programs are stored, and the CPU 101 performs the programs stored in the ROM 108 by using the RAM 102 as a work area.

In the nonvolatile memory 109, various pieces of information such as an address book, a received electronic mail and the like, which may be rewritten, are recorded.

The microphone unit 103 is a function block which includes a microphone to pick up user's voice and which performs processing of the voice picked up by the microphone.

The speaker unit 104 is a function block which includes a speaker to output voice sound to the user and which generates sound signals to drive the speaker.

The short distance radio unit 106 is provided to transmit an image, a telephone number and the like to an external device at a short distance without the intervention of the base station, and the infrared communication is employed in the present embodiment.

The camera unit 105 is a block which collects image data obtained by shooting. The display unit 110 is a block which displays the image on the LCD 111 (see Fig. 2). The key unit 113 is a block which detects a key operation of the various operation keys 121 (see Fig. 2) by the user. The clock 114 is a block to acquire the present time.

The media controller 107 is provided to read data from a recording medium 200 loaded into the loading port 124 shown in Fig. 2, or writing image data generated by the camera unit 105 in the recording medium 200.

The long distance communication unit 115 has the role of transmitting and receiving voice sound data, an electronic mail and the like via the antenna 116.

The low function terminal device 10 and the high function terminal devices 20A, 20B are constituted as described above with respect to external appearance and hardware.

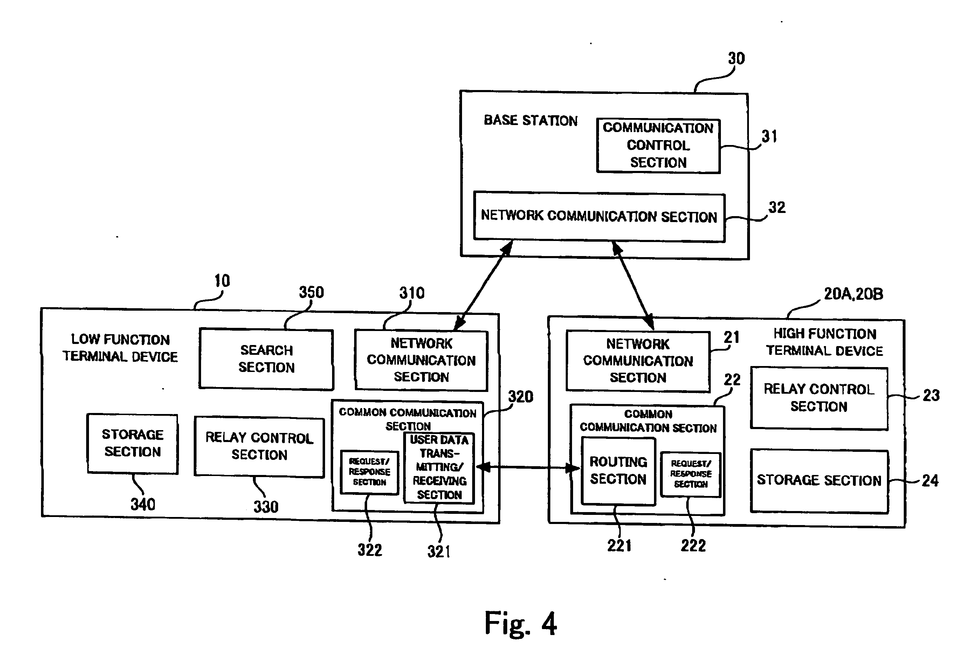

Fig. 4 is a figure showing function blocks which are constituted in the low function terminal device 10, the high function terminal devices 20A, 20B and the base station 30, shown in Fig. 1, and which are necessary for realizing a function (relay function) characteristic of the present embodiment.

The base station 30 is provided with a network communication section 32 which communicates with the low function terminal device 10 and the high function terminal devices 20A, 20B, and a communication control section 31 which controls the base station 30 and the whole communication system.

The high function terminal devices 20A, 20B, each is provided with: a network communication section 21 whose role is played by the long distance communication unit 115 of the high function terminal devices 20A, 20B (see Fig. 3), and which performs radio communication by the high function communication system via the base station 30; a common communication section 22 whose role is played by the short distance radio unit 106 of the high function terminal devices 20A, 20B (see Fig. 3), and which performs peer-to-peer communication with an external device by using infrared radiation; a relay control section 23 which controls the high function terminal devices 20A, 20B; and a storage section 24 which stores various information about communication. Further, the common communication section 22 is constituted by a request/response section 222 which receives a request transmitted from the low function terminal device 10 and which transmits a response to the request to the low function terminal device 10, and a routing section 221 which transfers data received by the network communication section 21 to the low function terminal device 10 and which transmits data sent from the low function terminal device 10 to the network communication section 21. The request/response section 222 corresponds to an example of the application receiving section in the present invention. The network communication section 21 corresponds to an example of the relay communication section in the present invention. The routing section 221 corresponds to the relay result transmitting section in the present invention.

The low function terminal device 10 is provided with a network communication section 310 whose role is played by the long distance communication unit 115 of the low function terminal device 10 (see Fig. 3), and which performs radio communication by the low function communication system via the base station 30, a common communication section 320 whose role is played by the short distance radio unit 106 of the low function terminal device 10 (see Fig. 3), and which performs peer-to-peer communication with an external device by using infrared radiation, a relay control section 330 which controls the low function terminal device 10 as a whole, a storage section 340 which stores various information about communication, and a search section 350 which searches the high function terminal device. Further, the common communication section 320 is constituted by a request/response section 322 which transmits various requests to the external device and receives responses to the requests, and a user data transmitting/receiving section 321 which receives data sent from the high function terminal devices 20A, 20B by the relay function, and which transmits to the high function terminal devices 20A, 20B data to be transferred to the external device. The search section 350 corresponds to an example of the first search section in the present invention. The request/response section 322 corresponds to an example of the relay application section in the present invention. The user data transmitting/receiving section 321 corresponds to an example of the relay result receiving section in the present invention.

The communication system is fundamentally constituted as described above.

Subsequently, the relay function performed by the communication system shown in Fig. 4 will be described.

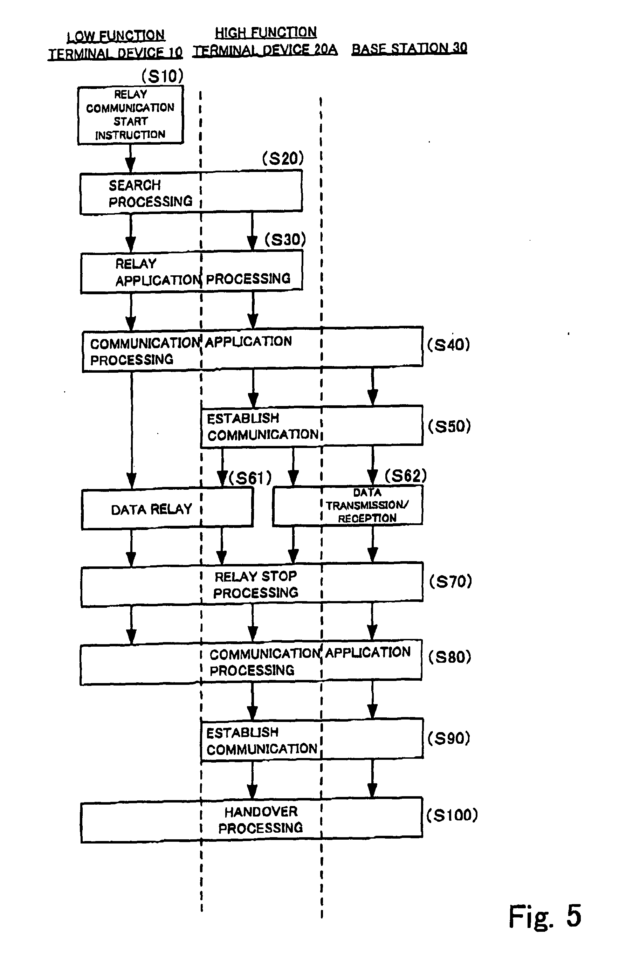

Fig. 5 is a flow chart showing an example of process flow in the relay function.

As described above, in the low function communication system employed in the network communication section 310 of the low function terminal device 10, data compressed by the high compression system cannot be transmitted and received. Thus, downloading of a moving image and the like cannot be performed by the low function terminal device 10 alone. When downloading the moving image by using the low function terminal device 10, the user of the low function terminal device 10 pushes the operation key 121 shown in Fig. 2, and selects the start of the relay function. At this time, contents of the operation of the operation key 121 are transmitted to the relay control section 330 in Fig. 4 via the key unit 113 in Fig. 3, and an instruction to start the relay communication is transmitted to each section of the low function terminal device 10 from the relay control section 330 (step S10 in Fig. 5). When the start of relay communication is instructed, search processing is started in the low function terminal device 10 (step S20 in Fig. 5).

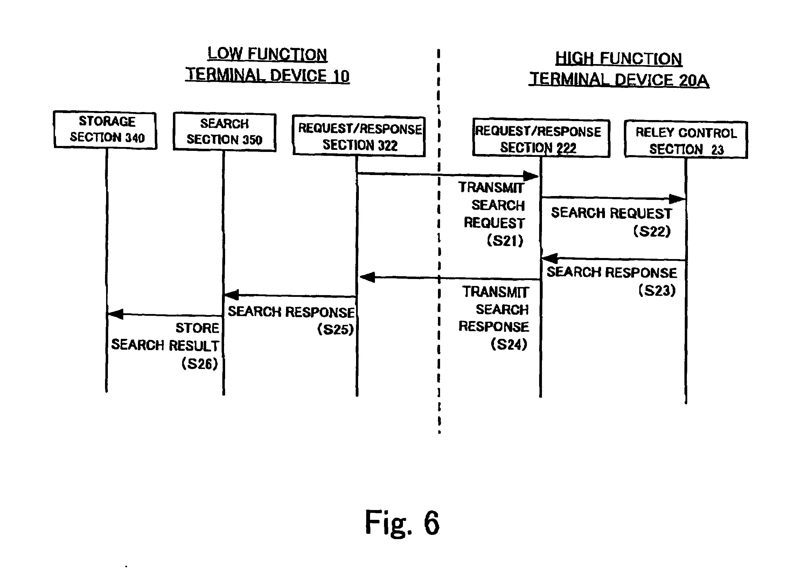

Fig. 6 is a flow chart showing a series of data flow in the search processing shown in step S20 in Fig. 5.

When the search processing is started, a search request which requires a response as to whether functions necessary for the relay communication to be performed are loaded or not, is generated in the search section 350 of the low function terminal device 10. The present embodiment is described as making a request as to whether "the function of transmitting and receiving data compressed by the high compression system" is loaded or not. In the request/response section 322, the search request generated in the search section 350 is transmitted by peer-to-peer communication using infrared radiation (step S21 in Fig. 6).

In the high function terminal device 20A within the infrared radiation area where the infrared radiation transmitted from the low function terminal device 10 can be received, the search request transmitted from the low function terminal device 10 is received in the request/response section 222 of the common communication section 22. The received search request is transmitted to the relay control section 23 (step S22 in Fig. 6). In the relay control section 23, whether the function required by the search request is loaded into the high function terminal device 20A or not is determined, so that the determination result and the identification information which identifies the terminal device 20A itself, are transmitted as a search response to the request/response section 222 (step S23 in Fig. 6). In present embodiment, the high function terminal device 20A is determined to be loaded with "the function of transmitting and receiving data compressed by the high compression system", so that the determination result and the telephone number uniquely assigned to the high function terminal device 20A are transmitted as the search response. In the request/response section 222, the search response received from the relay control section 23 is transmitted by peer-to-peer communication using infrared radiation (step S24 in Fig. 6) .

In the low function terminal device 10, the search response is received in the request/response section 322, and the received search response is transmitted to the search section 350 (step S25 in Fig. 6). In the search section 350, the determination result and the identification information which are contained in the search response are confirmed, so that the identification information of the terminal device 20A determined to be loaded with the requested function is transmitted to the relay control section 330, and the identification information of the terminal device 20A is stored as the search result in the storage section 340 (step S26 in Fig. 6). By storing the search result, it is only necessary from the next time to search whether or not the high function terminal device 20A exists in the infrared area of the low function terminal device 10. Thereby, it is possible to eliminate the time necessary for the low function terminal device 10 to confirm the function loaded to the high function terminal device 20A, and to search responses transmitted from plural terminal devices one by one.

The search processing shown in step S20 in Fig. 5 is performed as described above. When no high function terminal device is found within the infrared area range of the low function terminal device 10 as a result of the search processing, a message that "no terminal device corresponding to the request exists" is displayed on the LCD 111 of the low function terminal device 10, and then the relay function is stopped. When a high function terminal device is found within the infrared area range, the identification information (the telephone number in the present embodiment) of the found high function terminal device is displayed on the LCD 111 of the low function terminal device 10. When plural high function terminal devices are found, one of the plural high function terminal devices is selected by the user.

When a high function terminal device 20A is determined, the relay application processing which applies for execution of the relay function to the high function terminal device 20A, is started (step S30 in Fig. 5).

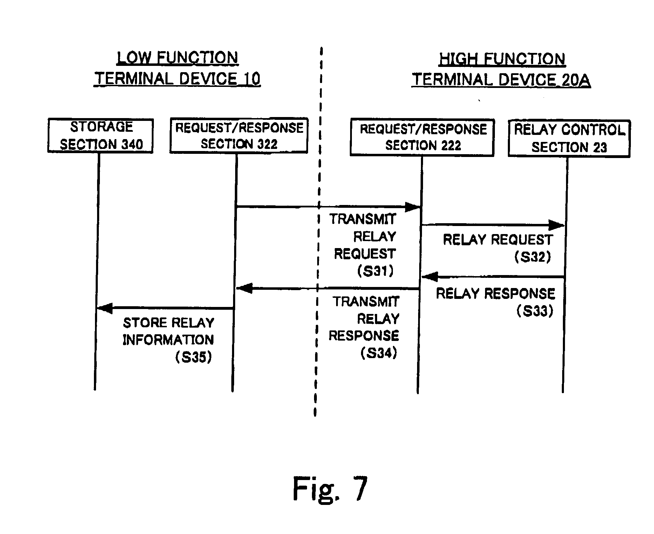

Fig. 7 is a flow chart showing a series of data flow in the relay application processing shown in step S30 in Fig. 5.

In the relay control section 330 of the low function terminal device 10, a relay request which includes the identification information (the telephone number in the present embodiment) of the low function terminal device 10 and which requests to execute the relay function is generated, and the generated relay request is transmitted to the request/response section 322. In the request/response section 322, the relay request is transmitted to the high function terminal device 20A by peer-to-peer communication using infrared radiation (step S31 in Fig. 7).

In the high function terminal device 20A, the relay request transmitted from the low function terminal device 10 is received by the request/response section 222 of the common communication section 22. The received relay request is transmitted to the relay control section 23 (step S32 in Fig. 7).

Here, the high function terminal device 20A is loaded with the communication function based on the high function communication system, but, for example, there are cases where execution of the relay function is permitted to only a telephone number predetermined by the user, and where no contract to utilize the service of communication by the high function communication system is made with the base station 30. In the relay control section 23, authentication of the low function terminal device 10 is performed on the basis of the identification information contained in the relay request, and further whether execution of the relay function in the high function terminal device 20A is permitted or not, is determined on the basis of the presence or absence of permission given by the user, and of the communication contract between the high function terminal device 20A and the base station 30, and the like. The determination result and the communication information (for example, IP address of the high function terminal device 20A and the like) necessary for performing communication with the base station 30 are transmitted as a relay response to the request/response section 222 (step S33 in Fig. 7). The present embodiment is described as making the relay function permitted to be performed in the high function terminal device 20A. The relay response received by the request/response section 222 is transmitted to the low function terminal device 10 by peer-to-peer communication using infrared radiation (step S34 in Fig. 7).

In the low function terminal device 10, the relay response is received in the request/response section 322, and the communication information contained in the relay response is stored as the relay information in the storage section 340 (step S35 in Fig. 7). By storing the relay information, it is possible to simplify the relay application processing from the next time, and to make the whole processing performed at a high speed.

As described above, the relay application processing shown in step S30 in Fig. 5 is executed. When execution of the relay function is not permitted by the high function terminal device 20A as a result of the relay application processing, the message of "no relay permission" is displayed on the LCD 111 of the low function terminal device 10, and the relay function is stopped.

When execution of the relay function is permitted, the communication application processing which requires the start of communication is started for the base station 30 (step S40 in Fig. 5).

The communication application processing shown in step S40 in Fig. 5 includes the case where the communication application is made from the low function terminal device 10 to the base station 30, and the case where the communication application is made from the high function terminal device 20A to the base station 30. First, the case where the communication application is made from the low function terminal device 10 is described.

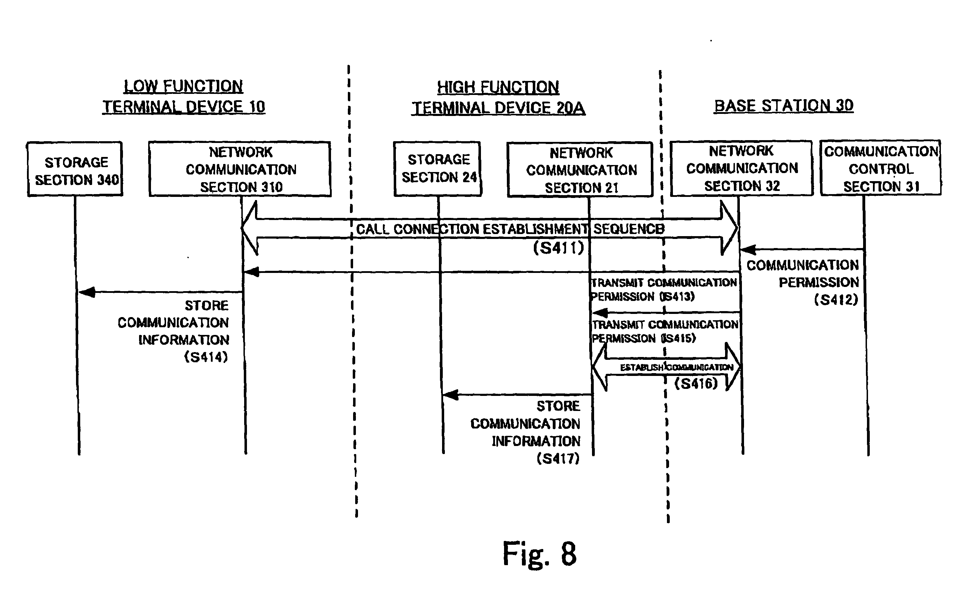

Fig. 8 is a flow chart showing a series of data flow in the case where the communication application processing shown in step S40 in Fig. 5 is performed by the low function terminal device 10.

When the communication application processing is started, in the low function terminal device 10, a call connection communication request consisting of the IP address of the low function terminal device 10, the IP address of the high function terminal device 20A and the like, are generated in the relay control section 330, and the generated call connection communication request is transmitted to the network communication section 310. The network communication section 310 transmits the call connection communication request to the base station 30. Unlike the low function communication system and the high function communication system, the call connection communication is a simple communication for request/response in which a simple communication procedure is employed.

In the base station 30, the call connection communication request is received in the network communication section 32. The network communication section 32 establishes call connection communication between the low function terminal device 10 and the high function terminal device 20A on the basis of the IP address of the low function terminal device 10 and the IP address of the high function terminal device 20A, which are included in the call connection communication request (step S411 in Fig. 8). Further, the communication control section 31 determines whether execution of the relay function is permitted or not, on the basis of whether the communication quality between the base station 30 and the high function terminal device 20A can be ensured or not, and the like, and transmits the determination result as a communication permission response to the network communication section 32 (step S412 in Fig. 8). The present embodiment is described as making execution of the relay function permitted. The communication permission response received by the network communication section 32 is transmitted to the low function terminal device 10 and the high function terminal device 20A (steps S413, S415 in Fig. 8).

In the low function terminal device 10, the communication permission response is received in the network communication section 310, and the received communication permission response is stored as the communication information in the storage section 340 (step S414 in Fig. 8).

Further, in the high function terminal device 20A, the communication permission response is also received in the network communication section 21. Upon receipt of the communication permission response sent from the base station 30, the network communication section 21 transmits to the base station 30 a communication request which requires the start of communication by the high function communication system.

Upon receipt of the communication request sent from the high function terminal device 20A, the network communication section 32 in the base station 30 establishes communication with the high function communication terminal device 20A by the high function communication system, and transmits a permission response of high function communication to the high function communication terminal device 20A (step S416 in Fig. 8).

In the high function terminal device 20A, the permission response of high function communication is received in the network communication section 21, and the received permission response is stored as the communication information in the storage section 24 (step S417 in Fig. 8).

As shown in step S414 and step S417 in Fig. 8, by storing the communication information, it is possible to simplify the communication establishment processing and to make the processing performed at a high speed from the next time.

In this way, the call connection communication between the low function terminal device 10 and the base station 30 is established by making the communication application from the low function terminal device 10 to the base station 30, so that a request can be directly transmitted from the base station 30 to the low function terminal device 10.

Further, in the case where the low function terminal device 10 is not provided with the function of communication via the network performed by the network communication section 310, and the like, the communication application is transmitted via the high function terminal device 20A.

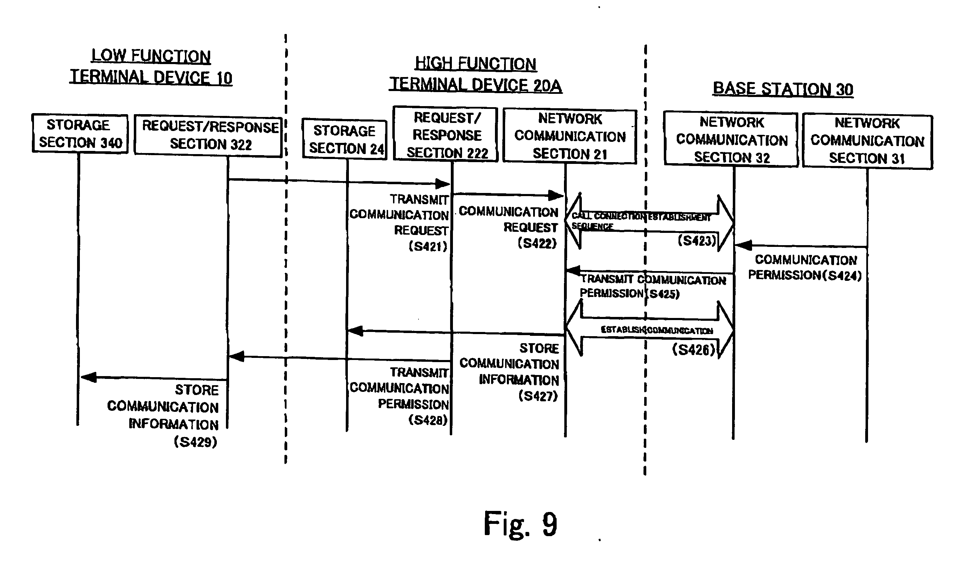

Fig. 9 is a flow chart showing a series of data flow in the case where the communication application processing shown in step S40 in Fig. 5 is performed by the high function terminal device.

When the communication application processing is started, in the low function terminal device 10, the communication application request is transmitted from the relay control section 330 to the request/response section 322, and the communication application request is transmitted from the request/response section 322 to the high function terminal device 20A (step S421 in Fig. 9).

In the high function terminal device 20A, the communication application request is received by the request/response section 222, and the call connection communication request consisting of the IP address of the high function terminal device 20A and the like is transmitted to the network communication section 21 (step S422 in Fig. 9). The call connection communication request transmitted to the network communication section 21 is further transmitted to the base station 30.

In the network communication section 32 of the base station 30, when the call connection communication request is received, the call connection communication with the high function terminal device 20A is established on the basis of the IP address of the high function terminal device 20A included in the call connection communication request (step S423 in Fig. 9). Further, in the communication control section 31, whether execution of the relay function is permitted or not is determined, and the determination result is transmitted as a communication permission response to the network communication section 32 (step S424 in Fig. 9). The communication permission response received by the network communication section 32 is transmitted to the high function terminal device 20A (step S425 in Fig. 9).

In the high function terminal device 20A, the communication permission response is received by the network communication section 21, and a communication request which requires the start of communication by the high function communication system is transmitted from the network communication section 21 to the base station 30.

The network communication section 32 of the base station 30 establishes communication by the high function communication system with the high function communication terminal device 20A in response to the communication request, and transmits a permission response of high function communication to the high function communication terminal device 20A (step S426 in Fig. 9).

In the high function terminal device 20A, the permission response of high function communication is received by the network communication section 21, and the received permission response is stored as the communication information in the storage section 24 (step S427 in Fig. 9). Further, the communication permission response to the communication application request received in step S421 is transmitted from the request/response section 222 to the low function terminal device 10 (step S428 in Fig. 9).

The communication permission response is received by the request/response section 322 of the low function terminal device 10, and the communication permission response is stored as the communication information in the storage section 340 (step S429 in Fig. 9).

As described above, the communication application processing shown in step S40 in Fig. 5 is performed. When execution of the relay function is not permitted by the base station 30 as a result of the communication application processing, the message of "no relay permission" is displayed on the LCD 111 of the low function terminal device 10, and the relay function is stopped.

When execution of the relay function is permitted by the base station 30 and communication between the high function terminal device 20A and the base station 30 is established (step S50 in Fig. 5), data transmitted and received by the low function terminal device 10 are started to be relayed by the high function terminal device 20A (step S61 in Fig. 5), and transmission and reception of data are performed between the high function terminal device 20A and the base station 30 (step S62 in Fig. 5).

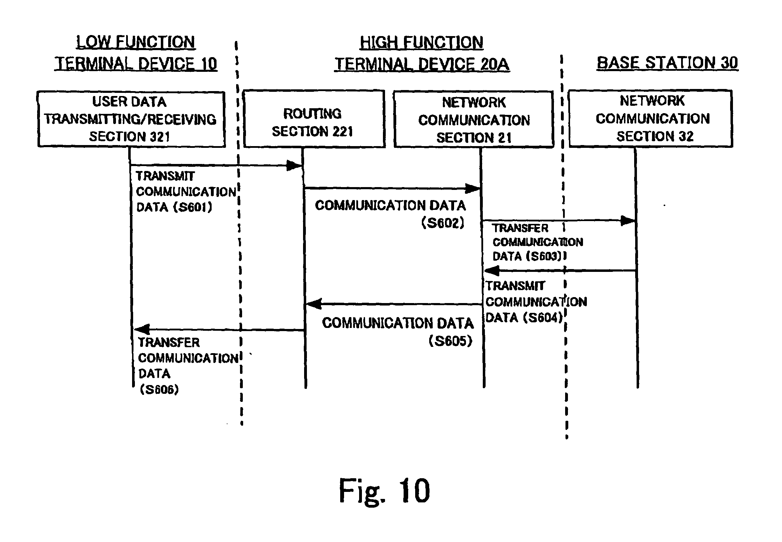

Fig. 10 is a flow chart showing a series of data flow in data relay processing by the high function terminal device 20A.

When data is transmitted from the low function terminal device 10 by using the relay function, communication data generated by the user's operation of the operation key 121 are transmitted from the user data transmitting/receiving section 321 to the high function terminal device 20A (step S601 in Fig. 10), and the transmitted communication data are received by the routing section 221 of the high function terminal device 20A. In this way, the transmission and reception of data between the low function terminal device 10 and the high function terminal device 20A are performed by infrared communication without the intervention of the network.

The communication data received, by the routing section 221 are transmitted to the network communication section 21 (step S602 in Fig. 10), and the high function communication system is employed so that the received communication data are transmitted from the network communication section 21 to the base station 30 (step S603 in Fig. 10). In the base station 30, the communication data are received by the network communication section 32. In this way, transmission and reception of the data between the high function terminal device 20A and the base station 30 are performed via the network by employing the high function communication system.

When data are received by the low function terminal device 10 by using the relay function, the high function communication system is employed so that communication data are transmitted from the network communication section 32 of the base station 30 to the high function terminal device 20A (step S604 in Fig. 10), and the transmitted communication data are received by the network communication section 21 of the high function terminal device 20A. The received communication data are transmitted to the routing section 221 (step S605 in Fig. 10), and are transmitted by infrared communication from the routing section 221 to the low function terminal device 10 (step S606 in Fig. 10).

In the low function terminal device 10, the communication data transmitted from the high function terminal device 20A are received by the user data transmitting/receiving section 321.

In this way, according to the present embodiment, the high function communication system 20A performs communication by the high function communication system and transfers the communication result to the low function terminal device 10 by infrared communication, thereby enabling even the low function terminal device 10 which is not provided with the high function communication system, to obtain moving image data and the like which cannot be obtained without the use of the high function communication system.

While data relay processing is performed by the high function terminal device 20A, for example, when the high function terminal device 20A is moved outside the infrared area range of the low function terminal device 10, and the like, the data relay stop processing is performed (step S70 in Fig. 5). The data relay stop processing includes the case where a stop instruction is transmitted from the low function terminal device 10, and the case where a stop instruction is transmitted from the high function terminal device 20A. First, the case where the stop instruction is transmitted from the low function terminal device 10 is described.

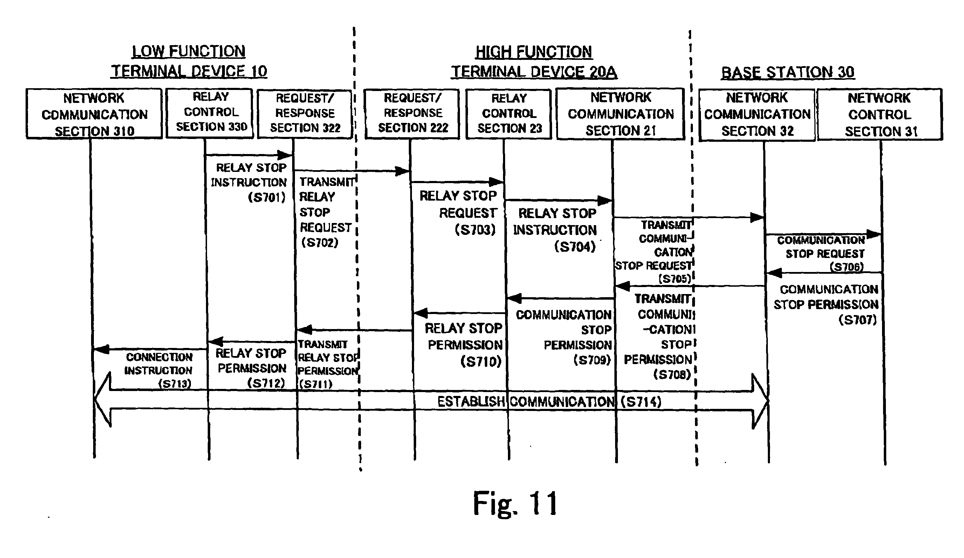

Fig. 11 is a flow chart showing a series of data flow in the case where the data relay stop instruction shown in step S70 in Fig. 5 is transmitted from the low function terminal device.

In the comparison between communication charges utilizing the low function communication system and that utilizing the high function communication system, the communication charge utilizing the high function communication system is generally more expensive. For example, in the case where the inexpensive low function communication system is selected even though the communication speed is deteriorated, the user of the low function terminal device 10 instructs to perform switching from communication utilizing the relay function to communication by the low function communication system by using the operation key 121 of the low function terminal device 10. At this time, the contents instructed by the user are transmitted to the relay control section 330 via the key unit 113. In the relay control section 330, a relay function stop request is generated, and the generated relay function stop request is transmitted to the request/response section 322 (step S701 in Fig. 11). The relay stop request received by the request/response section 322 is transmitted to the high function terminal device 20A (step S702 in Fig. 11). A combination of the operation key 121, the key unit 113 and the relay control section 330, for switching between communication utilizing the relay function and communication by the low function communication system, corresponds to an example of the first switching section in the present invention, while the relay control section 330 which instructs to stop the relay function corresponds to an example of the second switching section in the present invention.

In the high function terminal device 20A, the relay stop request is received by the request/response section 222, and the received stop request is transmitted to the relay control section 23 (step S703 in Fig. 11). The relay control section 23 instructs the network communication section 21 to stop the relay communication, and generates a communication stop request requiring the stop of communication between the high function terminal device 20A and the base station 30, and transmits the generated communication stop request to the network communication section 21 (step S704 in Fig. 11). The network communication section 21 transmits the communication stop request to the base station 30 (step S705 in Fig. 11).

The communication stop request transmitted from the high function terminal device 20A is received by the network communication section 32 of the base station 30, and transmitted to the communication control section 31 (step S706 in Fig. 11). The communication control section 31 instructs the network communication section 32 to disconnect the network with the high function terminal device 20A, and transmits permission to stop communication to the network communication section 32 (step S707 in Fig. 11). The network communication section 32 transmits communication stop permission to the high function terminal device 20A (step S708 in Fig. 11), and disconnects the network with the high function terminal device 20A.

In the high function terminal device 20A, when the communication stop permission is received by the network communication section 21, the communication stop permission is transmitted to the relay control section 23 (step S709 in Fig. 11). The relay control section 23 transmits the communication stop permission to the request/response section 222, and makes the network communication section 21 perform processing to disconnect the network with the base stations 30. The request/response section 222 transmits the communication stop permission to the low function terminal device 10 (step S711 in Fig. 11).

In the low function terminal device 10, the communication stop permission received by the request response section 322 is transmitted to the relay control section 330 (step S712 in Fig. 11). The relay control section 330 generates a communication request requiring the start of communication by the low function communication system, and transmits the communication request to the network communication section 310 (step S713 in Fig. 11). The network communication section 310 transmits the communication request to the base station 30. As a result, the communication by the low function communication system is established between the base station 30 and the low function terminal device 10 (step S714 in Fig. 11).

As described above, according to the present embodiment, the communication mode as to whether the relay function is utilized, or communication by the low function communication system loaded to the low function terminal device 10 is performed, can be switched by the user of the low function terminal device 10, depending upon the communication condition, data size to be downloaded and the like.

Subsequently, the case where the data relay stop instruction is transmitted from the high function terminal device 20A is described.

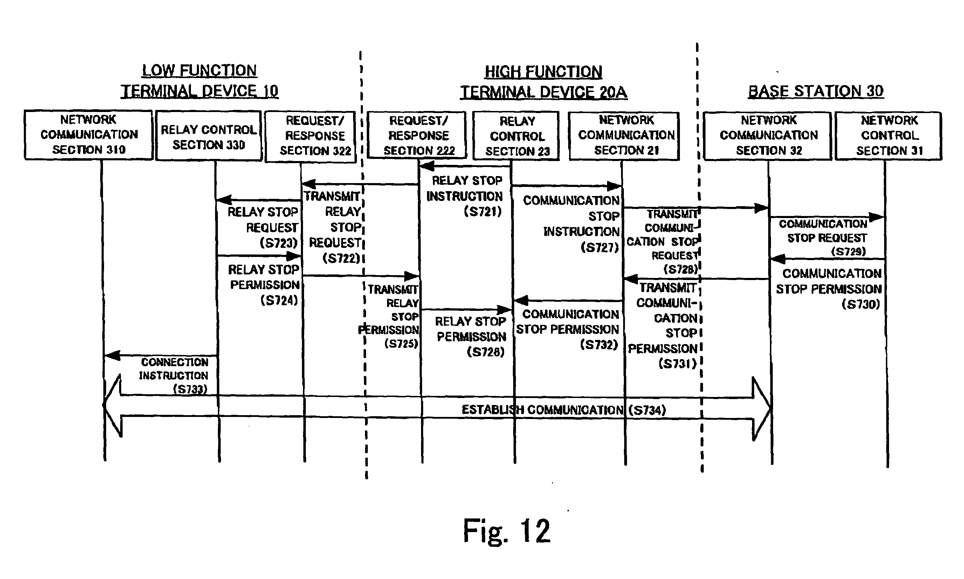

Fig. 12 is a flow chart showing a series of data flow in the case where the data relay stop instruction shown in step S70 in Fig. 5 is transmitted from the high function terminal device 20A.

For example, while the high function terminal device 20A performs the relay communication, when the user of the high function terminal device 20A is going to utilize communication by the high function communication system, the relay communication is stopped because the communication speed is deteriorated. While the relay communication is performed, when the user of the high function terminal device 20A instructs downloading of data and the like by using the operation key 121 of the high function terminal device 20A, the contents of the user's instruction are transmitted to the relay control section 23 via the key unit 113 of the high function terminal device 20A. In the relay control section 23, a relay function stop request and a communication stop request are generated, so that the relay function stop request is transmitted to the request/response section 222 (step S721 in Fig. 12), and the communication stop request is transmitted to the network communication section 21 (step S727 in Fig. 12). The relay function stop request received by the request/response section 222 is transmitted to the low function terminal device 10 (step S723 in Fig. 12), and the communication stop request transmitted to the network communication section 21 is further transmitted to the base station 30 (step S728 in Fig. 12). The relay control section 23 which instructs the stop of the relay function also corresponds to an example of the second switching section in the present invention.

In the base station 30, the communication stop request received by the network communication section 32 is transmitted to the communication control section 31 (step S729 in Fig. 12). The communication control section 31 instructs the network communication section 32 to disconnect the network with the high function terminal device 20A, and transmits communication stop permission to the network communication section 32 (step S730 in Fig. 12). The network communication section 32 transmits the communication stop permission to the high function terminal device 20A (step S731 in Fig. 12), and disconnects the network with the high function terminal device 20A.

Further, in the low function terminal device 10, the relay function stop request received by the request/response section 322 (step S722 in Fig. 12) is transmitted to the relay control section 330 (step S723 in Fig. 12). In the relay control section 330, relay stop permission for permitting the stop of relay function is transmitted to the request/response section 322, and the relay stop permission is transmitted from the request/response section 322 (step S724 in Fig. 12) to the high function terminal device 20A (step S725 in Fig. 12).

In the high function terminal device 20A, the communication stop permission received by the request/response section 222 is transmitted to the relay control section 23 (stepS726inFig. 12), and the communication stop permission received by the network communication section 21 is also transmitted to the relay control section 23 (step S732 in Fig. 12), as a result of which the relay communication is stopped.

Further, in the low function terminal device 10, a communication request which requires the start of communication by the low function communication system is generated in the relay control section 330, and transmitted to the network communication section 310 (step S733 in Fig. 12). When the network communication section 310 transmits the communication request to the base station 30, the communication by the low function communication system is established between the base station 30 and the low function terminal device 10 (step S734 in Fig. 12).

Subsequently, the case where the data relay stop instruction is transmitted from the base station 30 is described.

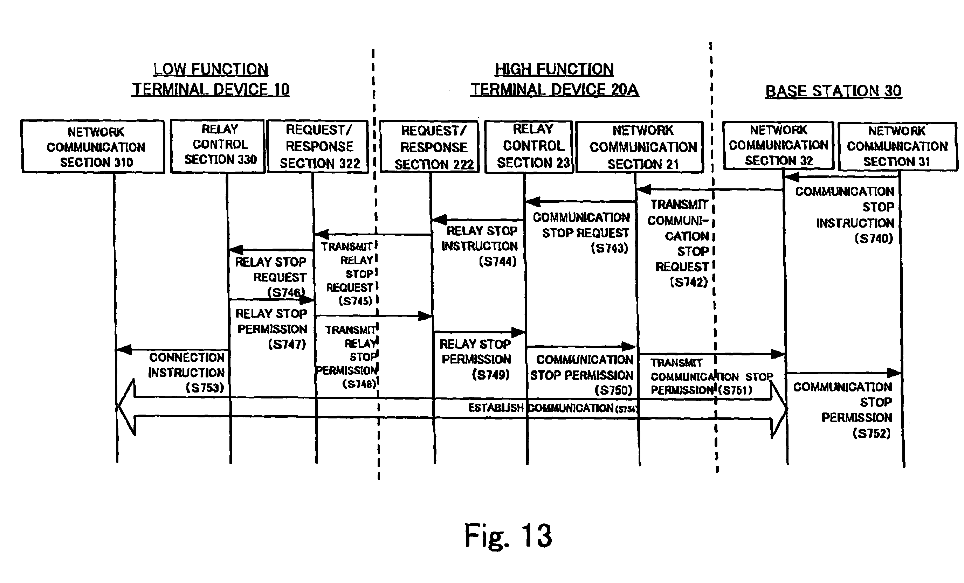

Fig. 13 is a flow chart showing a series of data flow in the case where the data relay stop instruction shown in step S70 in Fig. 5 is transmitted from the base station 30.

For example, at the time when the network is crowded, and the like, the communication performance between the high function terminal device 20A and the base station 30 may not be guaranteed. In such a case, the communication stop request is transmitted from the communication control section 31 of the base station 30 to the network communication section 32 (step S740 in Fig. 13), and the communication stop request is transmitted from the network communication section 32 to the high function terminal device 20A (step S742 in Fig. 13) . The communication control section 31 which instructs the stop of relay function, also corresponds to an example of the second switching section in the present invention.

In the high function terminal device 20A, the communication stop request received by the network communication section 21 is transmitted to the relay control section 23 (step S743 in Fig. 13). In response to the received request, in the relay control section 23, a relay communication stop request is transmitted to the request/response section 222 (step S744 in Fig. 13), and the relay communication stop request is transmitted from the request/response section 222 to the low function terminal device 10 (step S745 in Fig. 13).

In the low function terminal device 10, the relay function stop request received by the request/response section 322 is transmitted to the relay control section 330 (step S746 in Fig. 13). In the relay control section 330, upon receipt of the relay function stop request, relay stop permission is transmitted to the request/response section 322 (step S747 in Fig. 13), and the relay stop permission is transmitted from the request/response section 322 to the high function terminal device 20A (step S748 in Fig. 13).

In the high function terminal device 20A, the relay stop permission received by the request/response section 222 is transmitted to the relay control section 23 (step S749 in Fig. 13), and upon receipt of the relay stop permission, communication stop permission is transmitted from the relay control section 23 to the network communication section 21 (step S750 in Fig. 13), so that the communication stop permission is transmitted from the network communication section 21 to the base station 30 (step S751 in Fig. 13).

In the base station 30, the communication stop permission received by the network communication section 32 is transmitted to the communication control section 31 (step S752 in Fig. 13). The communication control section 31 instructs the network communication section 32 to disconnect the network with the high function terminal device 20A, and the network communication section 32 disconnects the network with the high function terminal device 20A.

Further, in the low function terminal device 10, a communication request which requires the start of communication by the low function communication system is generated in the relay control section 330, and the communication request is transmitted to the network communication section 310 (step S753 in Fig. 13). When the network communication section 310 transmits the communication request to the base station 30, the communication by the low function communication system is established between the base station 30 and the low function terminal device 10 (step S754 in Fig. 13).

As described above, the relay communication by the high function terminal device 20A is stopped (step S70 in Fig. 5), and the switching to the communication by the low function communication system is effected between the low function terminal device 10 and the base station 30. Further, when restart of the relay function is instructed by the user of the low function terminal device 10, the relay communication by the high function terminal device 20A is resumed by the same procedures as step S40 and step S50 in Fig. 5 (step S80, step S90 in Fig. 5), and the communication between the low function terminal device 10 and the base station 30 is vicariously performed by the high function terminal device 20A.

Further, while the relay communication is performed by the high function terminal device 20A, when the high function terminal device 20A is likely to move to the outside of the infrared area range of the low function terminal device 10, hand-over processing is performed (step S100 in Fig. 5).

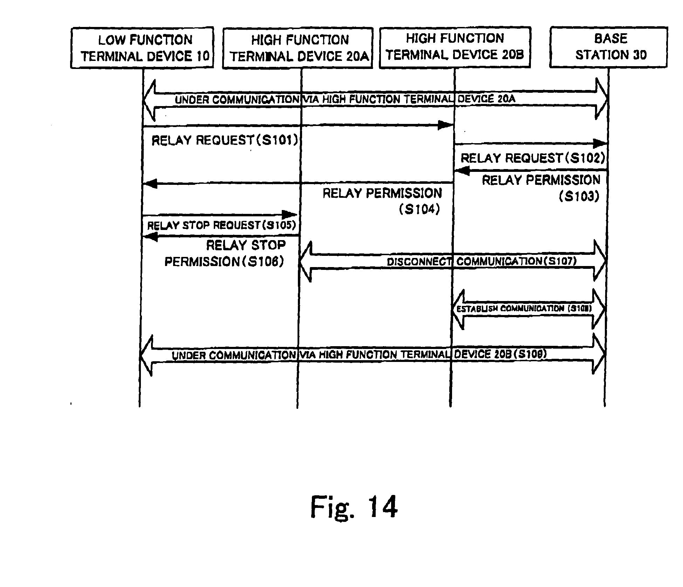

Fig. 14 is a flow chart showing a series of data flow in the handover processing in step S100 shown in Fig. 5.

While the communication between the low function terminal device 10 and the base station 30 is relayed by the high function terminal device 20A, when the high function terminal device 20A is moved to the outside of the secured infrared area range where the infrared radiation emitted by the low function terminal device 10 can be surely received, the search processing of step S20 in Fig. 5 is performed to search a terminal device which exists in the infrared area range of the low function terminal device 10, and which has "the function of transmitting and receiving data compressed by the high compression system". When the high function terminal device 20B is found, the relay application processing of step S30 in Fig. 5 is performed, and a relay request is transmitted from the low function terminal device 10 to the high function terminal device 20B (step S101 in Fig. 14).

In the high function terminal device 20B, whether execution of the relay function is permitted or not is determined in response to the relay request transmitted from the low function terminal device 10. When execution of the relay function is determined as being permitted, the relay request is transmitted to the base station 30 (step S102 in Fig. 14).

Also in the base station 30, whether execution of the relay function is permitted or not is determined in response to the relay request transmitted from the high function terminal device 20B. When execution of the relay function is determined as being permitted, relay permission is transmitted to the high function terminal device 20B and the low function terminal device 10 (step S103, step S104 in Fig. 14).

In the low function terminal device 10, a relay stop request is transmitted to the high function terminal device 20A (step S105 in Fig. 14), and in the high function terminal device 20A, relay stop permission is transmitted to the low function terminal device 10 in response to the relay stop request (step S106 in Fig. 14), as a result of which the communication with the base stations 30 is disconnected (step S107 in Fig. 14).

Further, communication by the high function communication system is established between the base station 30 and the high function terminal device 20B, (step S108 in Fig. 14), and communication between the low function terminal device 10 and the base station 30 is relayed by the high function terminal device 20B (step S109 in Fig. 14).

In this way, after a new high function terminal device is searched and found, the relay of communication is switched to the new high function terminal device, so that the relay processing can be continued without interrupting the communication between the low function terminal device 10 and the base station 30.

As described above, according to the present embodiment, for example when a high function terminal device with an overseas communication function exists in the vicinity of the low function terminal device which does not have the overseas communication function, the high function terminal device vicariously performs the network communication and transmits the communication result to the low function terminal device with infrared radiation and the like, thereby enabling communication to be performed by using the low function terminal device, even aboard.

In the above description, an example in which a portable telephone is applied as a communication terminal device according to the present invention is used. However, the PDA and the Internet telephone which performs speech communication by using the Internet line may also be applied as the communication terminal device in the present invention.

In the above description, an example in which infrared communication as the first communication system according to the present invention is used. However, the Bluetooth, the wire line communication by USB and the like may also be applied as the first communication system in the present invention.

## Claims

1. A communication system having a first communication terminal device which performs peer-to-peer communication by a first communication system, and a second communication terminal device which performs peer-to-peer communication with the first communication terminal device by the first communication system and performs communication via a communication network by a second communication system,
the first communication terminal device comprising: a relay application section which applies for communication relay via the communication network to the second communication terminal device by the first communication system; and a relay result receiving section which receives by the first communication system a result of communication by the second communication system via the communication network performed by the second communication terminal device on the basis of an application from the relay application section,
the second communication terminal device comprising: an application receiving section which receives a communication relay application from the first communication terminal device by the first communication system; a relay communication section which performs, in response to receipt of an application by the application receiving section, communication via the communication network in accordance with the application; and a relay result transmitting section which transmits by the first communication system a result of communication performed by the relay communication section to the first communication terminal device.

2. The communication system according to claim 1, wherein the relay application section applies for reception of data via the communication network,
wherein the relay communication section performs reception of data via the communication network, and
wherein the relay result transmitting section and the relay result receiving section perform transmission and reception of data received by the relay communication section, respectively.

3. The communication system according to claim 1, wherein the first communication terminal device further performs communication via the network by a third communication system in addition to the peer-to-peer communication by the first communication system, and wherein the first communication terminal device comprises a first switching section to switch communication by the third communication system and communication relayed by the second communication terminal device in accordance with a user operation.

4. The communication system according to claim 1, wherein the first communication terminal device further comprises a first searching section which performs a search operation on whether the second communication terminal device exists in a communicable range by the second communication system.

5. The communication system according to claim 1, further comprising a base station which is connected to the communication network to relay communication, wherein at least one of the base station, the first communication terminal device and the second communication terminal device has a second switching section which performs a switching operation on whether communication relay between the base station and the first communication terminal device by the second communication terminal device is permitted or not, and
wherein the application receiving section of the second communication terminal device receives a relay application only when the communication relay is permitted by the second switching section.

6. The communication system according to claim 5, wherein the relay application section of the first communication terminal device applies for communication relay, and applies for relay interruption to the second communication terminal device under communication relay, and
wherein the base station receives a communication stop request from the second communication terminal device under communication relay and a communication request from a new second communication terminal device, stops communication with the second communication terminal device under communication relay, and starts communication with the new second communication terminal device.

7. A communication terminal device which performs peer-to-peer communication with a first communication system, comprising:
a relay application section which applies for communication relay via a communication network to a second communication terminal device that performs peer-to-peer communication with the communication terminal device by the first communication system and that performs communication via the communication network by a second communication system; and
a relay result receiving section which receives a result of communication via the communication network by the second communication system performed by the second communication terminal device on the basis of an application from the relay application section, from the second communication terminal device by the first communication system.

8. A communication terminal device which performs peer-to-peer communication by a first communication system with a first communication terminal device performing peer-to-peer communication by a first communication system, and which performs communication via a communication network by a second communication system, comprising:
an application receiving section which receives a communication relay application by the first communication system from the first communication terminal device;
a relay communication section which performs, in response to receipt of an application by the application receiving section, communication via the communication network corresponding to the application by the second communication system; and
a relay result transmitting section which transmits by the first communication system a result of communication by the relay communication section to the first communication terminal device.
